# EUROPEAN PATENT APPLICATION

(11) **EP 4 024 209 A1**
(43) Date of publication of application: **06.07.2022**
(21) Application number: 20860912.3
(22) Date of filing: 18.08.2020
(51) Int. Cl.: G06F 9/451

(54) **THEME SWITCHING METHOD AND THEME SWITCHING APPARATUS**

(30) Priority: 02.09.2019 CN 201910825379
(71) Applicant: Huawei Technologies Co., Ltd., Longgang District Shenzhen, Guangdong 518129 (CN)
(72) Inventor: BI, Sheng, Shenzhen, Guangdong 518129 (CN)
(74) Representative: Goddar, Heinz J.
(86) International application number: PCT/CN2020/109786
(87) International publication number: WO 2021/042978

(57) **Abstract**

A theme switching method and a theme switching apparatus are provided. The method is applied to a terminal device. The method includes: obtaining a switching parameter when a theme switching operation is detected (S201); determining a to-be-enabled theme object based on the switching parameter, where the to-be-enabled theme object is in a loaded state (S202); and switching a theme object of the terminal device to the to-be-enabled theme object (S203). The method and the apparatus help improve theme switching efficiency of the terminal device.

## Description

This application claims priority to Chinese Patent Application No. 201910825379.2, filed with the China National Intellectual Property Administration on September 2, 2019 and entitled "THEME SWITCHING METHOD AND THEME SWITCHING APPARATUS", which is incorporated herein by reference in its entirety.

### TECHNICAL FIELD

This application relates to the field of terminal technologies, and in particular, to a theme switching method and a theme switching apparatus.

### BACKGROUND

With popularization of terminals and continuous development of communications technologies, people impose higher requirements on functions of the terminals. A changeable theme can enrich elements presented by the terminal, and can also add interest to the terminal.

However, currently, only one theme takes effect on the terminal at one specific time. If the theme needs to be switched to another theme, a user needs to manually select a new theme to be switched to on a theme interface, and then theme switching can be completed only after the terminal loads the new theme to be switched to. When theme switching is performed by using an existing theme switching method, it takes a period of time to load the new theme to be switched to. Consequently, switching efficiency is relatively low.

### SUMMARY

Embodiments of this application provide a theme switching method and a theme switching apparatus, to help improve theme switching efficiency.

According to a first aspect, an embodiment of this application provides a theme switching method. The method is applied to a terminal device. The method includes: obtaining a switching parameter when a theme switching operation is detected; determining a to-be-enabled theme object based on the switching parameter, where the to-be-enabled theme object is in a loaded state; and switching a theme object of the terminal device to the to-be-enabled theme object.

In this technical solution, before the theme object of the terminal device is switched to the to-be-enabled theme object, the to-be-enabled theme object is in a loaded state. This can avoid spending a period of time in loading the to-be-enabled theme object before the theme object of the terminal device is switched to the to-be-enabled theme object, thereby helping improve theme switching efficiency of the terminal device.

In an implementation, the terminal device stores a plurality of theme objects, each of the plurality of theme objects includes a class loader and path information, and the theme object is obtained by the class loader by loading a theme package indicated by the path information; and each theme package includes a resource identifier and a resource value, different theme packages have a same resource identifier but different resource values, and different theme objects include different class loaders.

In this technical solution, compared with that different theme packages have different resource identifiers and different resource values in the conventional technology, different theme packages have a same resource identifier but different resource values in this embodiment of this application. This can avoid selecting a resource identifier based on a quantity of theme objects, and help reduce a code amount and improve theme switching efficiency. In addition, in an Android operating system, two same resource identifiers cannot be defined. However, in this embodiment of this application, different theme objects are obtained by loading different class loaders. Therefore, even if resource identifiers in different theme packages are the same, the different theme packages can be loaded to the terminal device at the same time. In this way, a plurality of theme objects in a loaded state may exist in the terminal device. This can avoid a case in which the terminal device needs to spend a period of time in loading the to-be-enabled theme object when the terminal device detects the theme switching operation, and theme switching can be implemented only after the loading is completed, thereby helping improve theme switching efficiency and user experience.

In an implementation, the terminal device includes a foldable screen, and the foldable screen includes a first screen and a second screen. The theme switching operation includes one or more of the following operations: a folding operation on the foldable screen; a folding operation that changes a folding angle between the first screen and the second screen to a first preset angle; and a folding operation that enables a variation of the folding angle between the first screen and the second screen to reach a second preset angle.

In this technical solution, when the theme switching operation is the folding operation that enables the variation of the folding angle between the first screen and the second screen to reach the second preset angle, the following case can be avoided: When the foldable screen shakes due to a collision of the terminal device or another reason (in this case, a user does not want to switch the theme object of the terminal device), the folding angle between the first screen and the second screen changes and then a theme of the terminal device is switched. This avoids a misoperation.

In an implementation, the switching parameter includes a folding angle of the folding operation. A specific implementation of determining the to-be-enabled theme object based on the switching parameter may be: using a theme object corresponding to the folding angle of the folding operation as the to-be-enabled theme object based on a correspondence between a folding angle and a theme object.

In an implementation, the switching parameter includes a folding angle of the folding operation and auxiliary information, and the auxiliary information includes one or more of time information, date information, and weather information. A specific implementation of determining the to-be-enabled theme object based on the switching parameter may be: determining, based on a correspondence between a folding angle and a theme object set, a target theme object set corresponding to the folding angle of the folding operation; and determining the to-be-enabled theme object from the target theme object set based on the auxiliary information.

In this technical solution, the to-be-enabled theme object is determined from the target theme object set based on the auxiliary information, which helps add interest to a terminal.

In an implementation, the terminal device includes the foldable screen, and the foldable screen includes the first screen and the second screen. A specific implementation of switching the theme object of the terminal device to the to-be-enabled theme object may be: switching, to the to-be-enabled theme object, a theme object of a screen on which the theme switching operation is performed.

In this technical solution, when the user flips only a part of a plurality of screens included in the terminal device, a theme object of only a screen that is flipped by the user may be switched.

In an implementation, the terminal device includes the foldable screen, the foldable screen includes the first screen and the second screen, the to-be-enabled theme object includes a first theme object and a second theme object, and an association relationship exists between the first theme object and the second theme object. A specific implementation of switching the theme object of the terminal device to the to-be-enabled theme object may be: switching a theme object of the first screen to the first theme object, and switching a theme object of the second screen to the second theme object.

In this technical solution, when an association relationship exists between the first theme object and the second theme object, the theme object of the first screen is switched to the first theme object and the theme object of the second screen is switched to the second theme object. This helps add interest to the terminal device.

According to a second aspect, an embodiment of this application provides a theme switching apparatus. The apparatus is a terminal device or an apparatus (for example, a chip) having a function of a terminal device. The apparatus has a function of implementing the theme switching method according to the first aspect. The function may be implemented by hardware, or may be implemented by hardware by executing corresponding software. The hardware or the software includes one or more modules corresponding to the function.

According to a third aspect, an embodiment of this application provides a computer-readable storage medium, configured to store computer program instructions used by the theme switching apparatus according to the second aspect. The computer program instructions include a program used to execute the first aspect.

According to a fourth aspect, an embodiment of this application provides a theme switching apparatus. The apparatus is a terminal device or an apparatus (for example, a chip) having a function of a terminal device. The apparatus includes a memory and a processor. The memory stores program instructions, the processor is connected to the memory through a bus, and the processor invokes the program instructions stored in the memory to enable the apparatus to perform the method according to the first aspect.

According to a fifth aspect, an embodiment of this application provides a computer program product. The program product includes a program, and when the program is executed, the method according to the first aspect is implemented.

According to a sixth aspect, an embodiment of this application further provides a processor. The processor includes at least one circuit, configured to: obtain a switching parameter when a theme switching operation is detected; and determine a to-be-enabled theme object based on the switching parameter. The to-be-enabled theme object is in a loaded state. The processor further includes at least one circuit, configured to switch a theme object of the terminal device to the to-be-enabled theme object. The processor may be a chip, and may execute an instruction or a program used to implement the method according to the first aspect.

According to a seventh aspect, an embodiment of this application further provides a chip system. The chip system includes a processor, for example, applied to a terminal device, to implement the function or the method in the first aspect. In a feasible implementation, the chip system further includes a memory. The memory is configured to store program instructions and data that are necessary for implementing the function of the method according to the first aspect. The chip system may include a chip, or may include a chip and another discrete device.

### BRIEF DESCRIPTION OF DRAWINGS

FIG. 1a is a schematic diagram of a home screen of a terminal device 100 according to an embodiment of this application;
FIG. 1b is a schematic diagram of a scenario in which a user flips the terminal device 100 shown in FIG. 1a;
FIG. 1c is a schematic diagram of a structure of a terminal device 100 according to an embodiment of this application;
FIG. 1d is a schematic diagram of a software system of a terminal device 100 according to an embodiment of this application;
FIG. 2a is a schematic flowchart of a theme switching method according to an embodiment of this application;
FIG. 2b is a schematic diagram of a scenario in which a user sets a theme parameter on a theme setting page according to an embodiment of this application;
FIG. 2c is a schematic diagram of a home screen of a terminal device after a user taps an "OK" button 22 on a theme setting page according to an embodiment of this application;
FIG. 3a is a schematic flowchart of another theme switching method according to an embodiment of this application;
FIG. 3b is a schematic diagram of a scenario in which a folding operation is performed on the terminal device 100 shown in FIG. 1a according to an embodiment of this application;
FIG. 3c is a schematic diagram of background images displayed on a first screen and a second screen when a folding angle between the first screen and the second screen is 30° according to an embodiment of this application;
FIG. 3d is a schematic diagram of background images displayed on a first screen and a second screen when a folding angle between the first screen and the second screen is 0° according to an embodiment of this application;
FIG. 4 is a schematic flowchart of still another theme switching method according to an embodiment of this application;
FIG. 5 is a schematic diagram of a structure of a theme switching apparatus according to an embodiment of this application; and
FIG. 6 is a schematic diagram of a structure of another theme switching apparatus according to an embodiment of this application.

### DESCRIPTION OF EMBODIMENTS

To better understand a theme switching method disclosed in embodiments of this application, the following first describes an application scenario to which embodiments of this application are applicable.

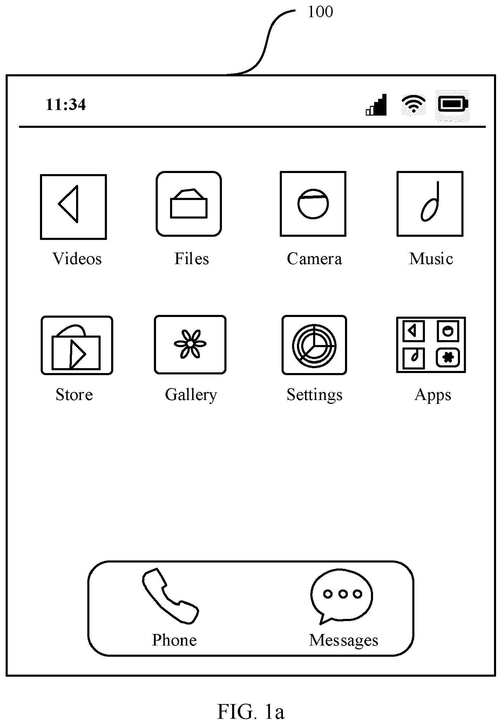

FIG. 1a is a schematic diagram of a home screen of a terminal device 100 according to an embodiment of this application. As shown in FIG. 1a, the home screen of the terminal device 100 includes a plurality of application icons (such as "videos", "files", "camera", "music", "App store", "gallery", "settings", "Apps", "phone", and "messages"), a time icon, a communication signal icon, a wireless local area network (wireless local area network, WLAN) (for example, wireless fidelity (wireless fidelity, Wi-Fi)) network connection status icon, a battery icon, and the like.

When a user flips the terminal device 100 shown in FIG. 1a, the terminal device 100 may detect a theme switching operation, and obtain a switching parameter, to determine a to-be-enabled theme object based on the switching parameter. The to-be-enabled theme object is in a loaded state. Then, a theme object of the terminal device 100 is switched to the to-be-enabled theme object.

A terminal may set content, for example, a background color, a screen saver picture, a screen saver, a ringtone, an operation interface, an icon, a text, and a screen layout, of the terminal at the same time by setting a theme object, so that a user can customize the terminal more conveniently. The screen layout may determine a display location, on a screen, of an element displayed on the screen. The terminal device 100 may store a plurality of theme objects. The plurality of theme objects include at least a theme object (for example, a theme object 1) used by the terminal device 100 before flipping and a theme object (namely, the to-be-enabled theme object) used by the terminal device 100 after flipping.

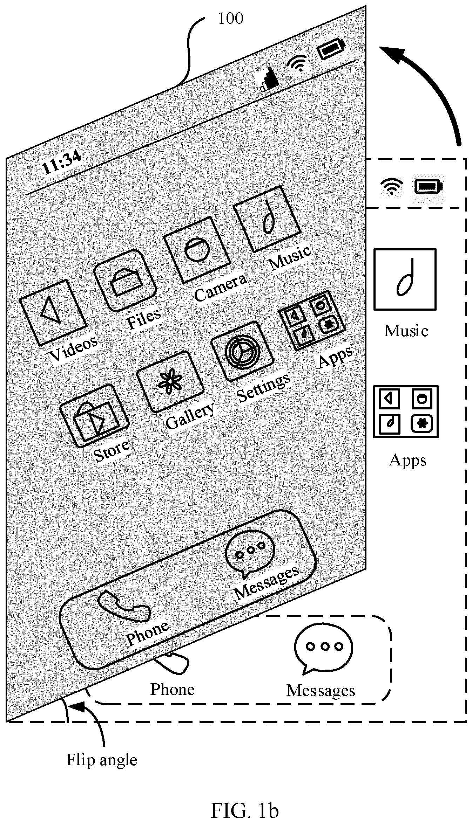

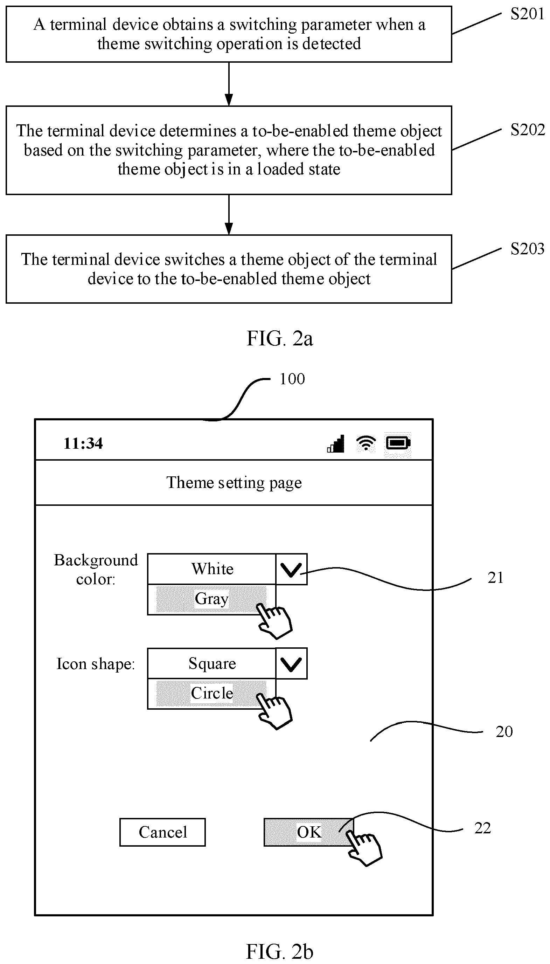

FIG. 1b is a schematic diagram of a scenario in which a user flips the terminal device 100 shown in FIG. 1a. In this embodiment of this application, an example in which the to-be-enabled theme object is a theme object 2 is used for description, and an example in which when the terminal device 100 uses the theme object 1, the background color of the home screen of the terminal device 100 is white, and when the terminal device 100 uses the theme object 2, the background color of the home screen of the terminal device 100 is gray is used for description. As shown in FIG. 2b, before the user flips the terminal device 100 shown in FIG. 1a, the background color of the home screen of the terminal device 100 is white; and after the user flips the terminal device 100 shown in FIG. 1a, the background color of the home screen of the terminal device 100 changes to gray. In other words, when the user flips the terminal device 100 shown in FIG. 1a (that is, the terminal device 100 detects the theme switching operation), the theme object of the terminal device 100 may be switched to the theme object 2, that is, the theme object of the terminal device 100 changes from the theme object 1 to the theme object 2.

The switching parameter may include a flip angle in FIG. 1b. The terminal device 100 may store a correspondence between a flip angle and a theme object, and use, based on the correspondence, a theme object corresponding to the flip angle in FIG. 1b as the to-be-enabled theme object. It should be noted that the to-be-enabled theme object is in a loaded state, and that the to-be-enabled theme object is in a loaded state indicates that the to-be-enabled theme object is loaded to memory space of the terminal device 100. In this embodiment of this application, before the theme object of the terminal device 100 is switched to the to-be-enabled theme object, the to-be-enabled theme object is in a loaded state. This can avoid spending a period of time in loading the to-be-enabled theme object before the theme object of the terminal device 100 is switched to the to-be-enabled theme object, thereby helping improve theme switching efficiency of the terminal device 100.

It should be noted that it is merely used as an example that the theme switching operation includes an operation that the user flips the terminal device 100 shown in FIG. 1a, and does not constitute a limitation on embodiments of this application. In another feasible implementation, any operation used to trigger theme switching is the theme switching operation described in this embodiment of this application. In other words, the theme switching method provided in this embodiment of this application is applicable to any theme switching scenario.

The terminal device 100 is also referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transceiver function, a virtual reality (virtual reality, VR) terminal device, or an augmented reality (augmented reality, AR) terminal device, a wireless terminal in industrial control, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. A specific technology and a specific device form that are used by the terminal device are not limited in embodiments of this application.

It may be understood that a network architecture described in embodiments of this application is intended to describe the technical solutions in embodiments of this application more clearly, and does not constitute a limitation on the technical solutions provided in embodiments of this application. A person of ordinary skill in the art may know that with evolution of a system architecture and emergence of a new service scenario, the technical solutions provided in embodiments of this application are also applicable to similar technical problems.

To better understand embodiments of this application, the following describes a structure of a terminal device in embodiments of this application.

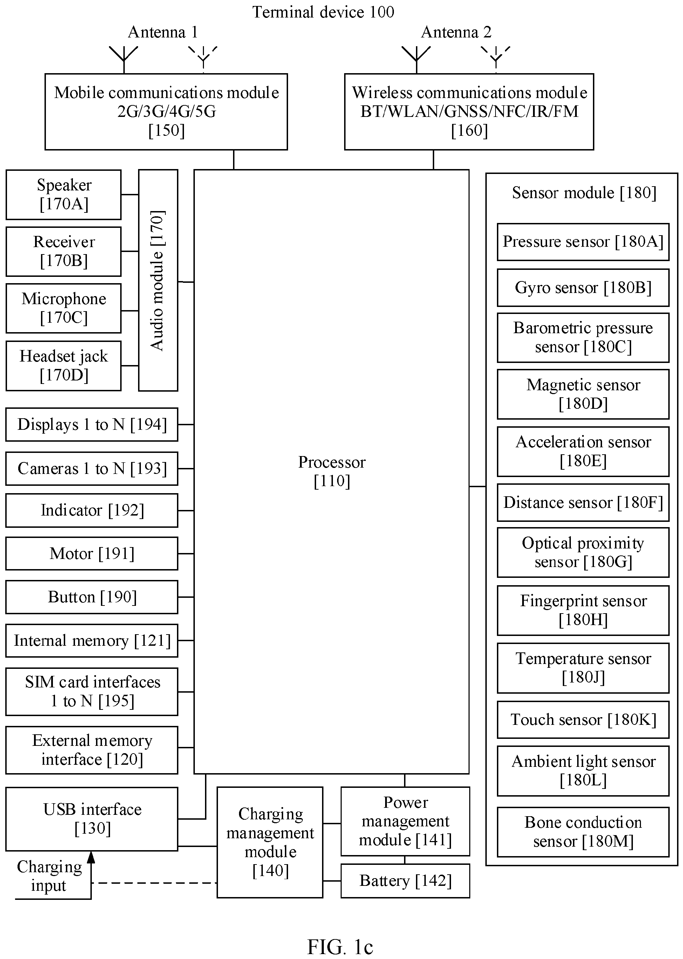

FIG. 1c is a schematic diagram of a structure of the terminal device 100. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that, a structure illustrated in this embodiment of this application does not constitute a specific limitation on the terminal device 100. In some other embodiments of this application, the terminal device 100 may include more or fewer parts than those shown in the figure, or combine some parts, or split some parts, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different 12C bus interfaces. For example, the processor 110 may be coupled to the touch sensor 180K through an I2C interface, so that the processor 110 communicates with the touch sensor 180K through the I2C bus interface to implement a touch function of the terminal device 100.

The 12S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communications module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communications module 160 through a PCM bus interface. In some embodiments, the audio module 170 may alternatively transmit an audio signal to the wireless communications module 160 through the PCM interface, to implement a function of answering a call through a Bluetooth headset. Both the I2S interface and the PCM interface may be configured to perform the audio communication.

The UART interface is a universal serial data bus, and is configured to perform asynchronous communication. The bus may be a two-way communications bus. The bus switches to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transmit an audio signal to the wireless communications module 160 through the UART interface, to implement a function of playing music through the Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface to implement a photographing function of the terminal device 100. The processor 110 communicates with the display 194 through the DSI interface, to implement a display function of the terminal device 100.

The GPIO interface may be configured by using software. The GPIO interface may be configured as a control signal or a data signal. In some embodiments, the GPIO interface may be configured to connect the processor 110 to the camera 193, the display 194, the wireless communications module 160, the audio module 170, the sensor module 180, and the like. The GPIO interface may be further configured as the I2C interface, the I2S interface, the UART interface, the MIPI interface, or the like.

The USB interface 130 is an interface that complies with a USB standard specification, and may be specifically a mini USB interface, a micro USB interface, a USB Type-C interface, or the like. The USB interface 130 may be configured to connect to the charger to charge the terminal device 100, or may be configured to transmit data between the terminal device 100 and a peripheral device, or may be configured to connect to a headset, to play audio through the headset. The interface may be further configured to connect to another electronic device such as an AR device.

It can be understood that an interface connection relationship between the modules illustrated in this embodiment of this application is merely an example for description, and does not constitute a limitation on the structure of the terminal device 100. In some other embodiments of this application, the terminal device 100 may alternatively use different interface connection manners in the foregoing embodiments or a combination of a plurality of interface connection manners.

The charging management module 140 is configured to receive charging input from a charger. The charger may be a wireless charger or a wired charger. In some embodiments of wired charging, the charging management module 140 may receive charging input of the wired charger through the USB interface 130. In some embodiments of wireless charging, the charging management module 140 may receive wireless charging input by using a wireless charging coil of the terminal device 100. When charging the battery 142, the charging management module 140 may further supply power to the terminal device by using the power management module 141.

The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communications module 160, and the like. The power management module 141 may be configured to monitor parameters such as a battery capacity, a battery cycle count, and a battery state of health (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented by using the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the terminal device 100 may be configured to cover one or more communications frequency bands. Different antennas may further be multiplexed to improve antenna utilization. For example, the antenna 1 may be multiplexed as a diversity antenna in a wireless local area network. In some other embodiments, an antenna may be used in combination with a tuning switch.

The mobile communications module 150 may provide a wireless communications solution applied to the terminal device 100, including 2G, 3G, 4G, 5G, or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some function modules of the mobile communications module 150 may be disposed in the processor 110. In some embodiments, at least some function modules of the mobile communications module 150 may be disposed in the same device as at least some modules of the processor 110.

The modem processor may include a modulator and a demodulator. The modulator is configured to modulate a to-be-sent low-frequency baseband signal into a medium-frequency or high-frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal by using an audio device (which is not limited to the speaker 170A, the receiver 170B, and the like), or displays an image or a video on the display 194. In some embodiments, the modem processor may be an independent component. In some other embodiments, the modem processor may be independent of the processor 110, and is disposed in the same device as the mobile communications module 150 or another function module.

The wireless communications module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the terminal device 100. The wireless communications module 160 may be one or more components integrating at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, the antenna 1 of the terminal device 100 is coupled to the mobile communications module 150, and the antenna 2 thereof is coupled to the wireless communications module 160, so that the terminal device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal device 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs, which execute program instructions to generate or change display information.

The display 194 is configured to display an image, a video, or the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP is configured to process data fed back by the camera 193. For example, during photographing, a shutter is pressed, and a ray of light is transmitted to a photosensitive element of a camera through a lens. An optical signal is converted into an electrical signal. The photosensitive element of the camera transmits the electrical signal to the ISP for processing, and converts the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected to the photosensitive element. The light-sensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier Transform on frequency energy.

The video codec is configured to compress or decompress a digital video. The terminal device 100 may support one or more types of video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the terminal device 100, for example, image recognition, facial recognition, speech recognition, and text understanding, can be implemented by using the NPU.

The external memory interface 120 may be configured to connect to an external storage card, for example, a micro SD card, to extend a storage capability of the terminal device 100. The external storage card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data or a phone book) created in a process of using the terminal device 100. In addition, the internal memory 121 may include a high-speed random access memory, and may further include a nonvolatile memory, for example, at least one magnetic disk storage device, a flash storage device, or a universal flash storage (universal flash storage, UFS). The processor 110 executes various function applications and data processing of the terminal device 100 by running the instruction stored in the internal memory 121 and/or the instruction stored in the memory disposed in the processor.

The terminal device 100 may implement an audio function through the audio module 170, the speaker 170A, the receiver 170B, the microphone 170C, the headset jack 170D, the application processor, and the like, for example, implement a music playback function and a recording function.

The audio module 170 is configured to convert digital audio information into an analog audio signal output, and is also configured to convert an analog audio input into a digital audio signal. The audio module 170 may further be configured to code and decode an audio signal. In some embodiments, the audio module 170 may be disposed in the processor 110, or some function modules of the audio module 170 are disposed in the processor 110.

The speaker 170A, also referred to as a "loudspeaker", is configured to convert an audio electrical signal into a sound signal. The terminal device 100 may be configured to listen to music or listen to a hands-free call by using the speaker 170A.

The receiver 170B, also referred to as an "earpiece", is configured to convert an audio electrical signal into a sound signal. When the terminal device 100 is configured to answer a call or listen to voice information, a voice may be listened to by placing the receiver 170B close to a human ear.

The microphone 170C, also referred to as a "mike" or a "mic", is configured to convert a sound signal into an electrical signal. When a user makes a call, or sends voice information, the user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100. In addition to collecting a sound signal, the microphones may further implement a noise reduction function. In some other embodiments, three, four, or more microphones 170C may be disposed in the terminal device 100, to collect a sound signal, reduce noise, identify a sound source, implement a directional recording function, and the like.

The headset jack 170D is configured to connect to a wired headset. The headset jack 170D may be a USB interface 130, or may be a 3.5-mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure strength based on a capacitance change. When a touch operation is performed on the display 194, the terminal device 100 detects strength of the touch operation based on the pressure sensor 180A. The terminal device 100 may further calculate a touch position based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on an SMS message application icon, an instruction for creating an SMS message is executed.

The gyro sensor 180B may be configured to determine a motion posture of the terminal device 100. In some embodiments, angular velocities of the terminal device 100 around three axes (that is, x, y, and z axes) may be determined by using the gyro sensor 180B. The gyro sensor 180B may be configured to perform image stabilization during photographing. For example, when the shutter is opened, the gyro sensor 180B detects a shake angle of the terminal device 100, calculates, based on the angle, a distance that needs to be compensated by a lens module, and enables the lens to counteract the shake of the terminal device 100 by performing reverse motion, thereby implementing image stabilization. The gyro sensor 180B may also be used in a navigation scenario and a somatic game scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall sensor. The terminal device 100 may detect opening and closing of a flip cover by using the magnetic sensor 180D. In some embodiments, when the terminal device 100 is a flip phone, the terminal device 100 can detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations of the terminal device 100 in various directions (generally on three axes). A magnitude and a direction of gravity may be detected when the terminal device 100 is stationary. The acceleration sensor may be further configured to identify a posture of the terminal device, and is used in an application such as switching between a landscape mode and a portrait mode or a pedometer.

The distance sensor 180F is configured to measure a distance. The terminal device 100 may measure a distance by using infrared light or a laser. In some embodiments, in a photographing scenario, the terminal device 100 may measure a distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The terminal device 100 emits infrared light outward by using the light-emitting diode. The terminal device 100 detects infrared reflected light from a nearby object by using the photodiode. When detecting plenty of reflected light, the terminal device 100 may determine that there is an object near the terminal device 100. When detecting inadequate reflected light, the terminal device 100 may determine that there is no object near the terminal device 100. The terminal device 100 may detect, by using the optical proximity sensor 180G, that the user holds the terminal device 100 close to the ear for a call, to automatically turn off a screen to save power. The optical proximity sensor 180G may also be used in a smart cover mode or a pocket mode to automatically perform screen unlocking or locking.

The ambient light sensor 180L is configured to sense ambient light brightness. The terminal device 100 may adaptively adjust luminance of the display 194 based on the sensed ambient light luminance. The ambient light sensor 180L may also be configured to automatically adjust white balance during photographing. The ambient light sensor 180L may further cooperate with the optical proximity sensor 180G to detect whether the terminal device 100 is in a pocket, to prevent accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy by using the temperature detected by the temperature sensor 180J. For example, when the temperature reported by the temperature sensor 180J exceeds a threshold, the terminal device 100 reduces performance of a processor located near the temperature sensor 180J, to reduce power consumption and implement heat protection. In some other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 boosts an output voltage of the battery 142, to avoid abnormal shutdown caused by a low temperature.

The touch sensor 180K is also referred to as a "touch control device". The touch sensor 180K may be disposed in the display 194, and the touch sensor 180K and the display 194 form a touchscreen, which is also referred to as a "touch screen". The touch sensor 180K is configured to detect a touch operation on or near the touch sensor 180K. The touch sensor may transfer the detected touch operation to the application processor, to determine a type of a touch event. A visual output related to the touch operation may be provided through the display 194. In some other embodiments, the touch sensor 180K may alternatively be disposed on a surface of the terminal device 100, and at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse to receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 may receive button input, and generate button signal input related to user setting and function control of the terminal device 100.

The motor 191 may generate a vibration prompt. The motor 191 may be configured to produce an incoming call vibration prompt and a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display 194. Different application scenarios (for example, time reminding, information receiving, an alarm clock, and a game) may also correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be inserted into the same SIM card interface 195 at the same time. The plurality of cards may be of a same type or of different types. The SIM card interface 195 may be compatible with different types of SIM cards. The SIM card interface 195 may also be compatible with the external storage card. The terminal device 100 interacts with a network through the SIM card, to implement functions such as a call and data communication. In some embodiments, the terminal device 100 uses an eSIM, that is, an embedded SIM card. The eSIM card may be embedded in the terminal device 100, and cannot be separated from the terminal device 100.

A software system of the terminal device 100 may use a layered architecture, an event-driven architecture, a microkernel architecture, a microservice architecture, or a cloud architecture. In this embodiment of this application, an Android system with the hierarchical architecture is used as an example to describe a software structure of the terminal device 100.

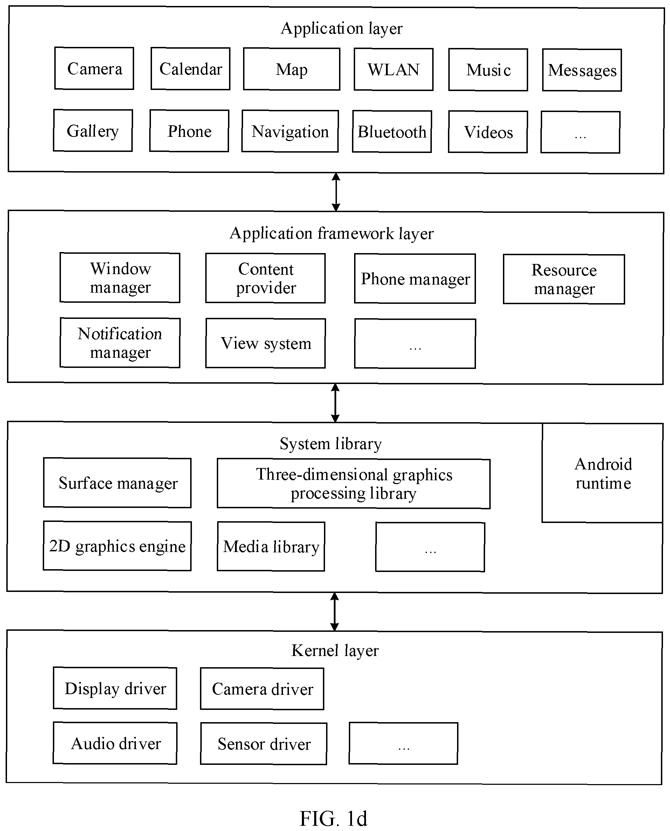

FIG. 1d is a block diagram of a software structure of a terminal device 100 according to an embodiment of this application.

In the layered architecture, software is divided into several layers, and each layer has a clear role and task. The layers communicate with each other through a software interface. In some embodiments, the Android system is divided into four layers, namely, an application layer, an application framework layer, an Android runtime (Android runtime) and system library, and a kernel layer from top to bottom.

The application layer may include a series of application packages.

As shown in FIG. Id, the application package may include applications such as "camera", "gallery", "calendar", "phone", "map", "navigation", "WLAN", "Bluetooth", "music", "videos", and "messages".

The application framework layer provides an application programming interface (application programming interface, API) and a programming framework for an application at the application layer. The application framework layer includes some predefined functions.

As shown in FIG. Id, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the terminal device 100, for example, management of call statuses (including answering, declining, and the like).

The resource manager provides, for an application, various resources such as a localized character string, an icon, a picture, a layout file, and a video file.

The notification manager enables an application to display notification information in the status bar, and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, a prompt tone is produced, the terminal device vibrates, or an indicator light blinks.

The Android runtime includes a core library and a virtual machine. The Android runtime is responsible for scheduling and management of the Android system.

The kernel library includes two parts: One part is a performance function that needs to be invoked by Java language, and the other part is an Android kernel library.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, a static image file, and the like. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the terminal device 100 with reference to a photographing scenario.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap touch operation, and a control corresponding to the single-tap operation is a control of a camera application icon. A camera application invokes an interface at the application framework layer to enable the camera application, then enables a camera driver by invoking the kernel layer, and captures a static image or a video through the camera 193.

The following describes in detail a theme switching method and a theme switching apparatus that are provided in this application with reference to the accompanying drawings.

FIG. 2a is a schematic flowchart of a theme switching method according to an embodiment of this application. An execution body of the theme switching method is a terminal device or a chip in a terminal device. The following uses an example in which the terminal device is the execution body of the theme switching method for description. As shown in FIG. 2a, the method may include but is not limited to the following steps.

Step S201: The terminal device obtains a switching parameter when a theme switching operation is detected.

In this embodiment of this application, the terminal device may detect a preset theme switching operation in real time, periodically, or aperiodically, and obtain a switching parameter when detecting a theme switching operation. Specifically, the theme switching operation may be a trigger operation (for example, a tap, touch and hold, or slide operation) on a preset switching button in the terminal device. The preset switching button may be a virtual button on a display of the terminal device, or may be a hardware button in the terminal device, which is not limited in this embodiment of this application. In an implementation, the theme switching operation may be a flip operation on the terminal device, and a flip angle of the terminal device may change by using the flip operation on the terminal device. By using the flip operation on the terminal device, the terminal device may be enabled to rotate around a first direction. The first direction may include any one of directions such as a direction in parallel to a vertical frame (for example, a length direction of a frame of the terminal device 100 in FIG. 1a, which is not shown in FIG. 1a) of the terminal device, a direction in parallel to a horizontal frame (for example, a width direction of a frame of the terminal device 100 in FIG. 1a, which is not shown in FIG. 1a) of the terminal device, or a direction perpendicular to a screen of the terminal device. In an implementation, the terminal device may set the theme switching operation by default, or a user may customize or change a set theme switching operation.

When the terminal device detects the theme switching operation, it indicates that a theme object of the terminal device needs to be switched. It should be noted that the theme object of the terminal device may include a theme object used by an operating system of the terminal device and/or a theme object used by an application currently running on the terminal device. It should be noted that, when the theme object of the terminal device is mentioned in this embodiment of this application, the theme object may be specifically the theme object of the operating system of the terminal device and/or the theme object of the application currently running on the terminal device. A theme switching operation for the theme object used by the operating system of the terminal device may be the same as a theme switching operation for the theme object used by the application currently running on the terminal device. In other words, when the terminal device detects a theme switching operation, it indicates that the theme object used by the operating system of the terminal device and the theme object used by the application currently running on the terminal device need to be switched. An operating system (operating system, OS) is system software that manages computer hardware and software resources, and provides a common service for a computer program. The operating system mentioned in this embodiment of this application may be an Android operating system or an operating system obtained through Android-based secondary development.

In an implementation, all or some of the theme switching operation for the theme object used by the operating system of the terminal device and the theme switching operation for the theme object used by the application currently running on the terminal device may be completely different or incompletely the same. For example, it is assumed that, that any one of an operation 1, an operation 2, and an operation 3 is detected indicates that the theme object of the operating system of the terminal device needs to be switched, and that either the operation 3 or an operation 4 is detected indicates that the theme object of the application currently running on the terminal device needs to be switched. If the terminal device detects the operation 1 or the operation 2, the terminal device may switch the theme object of the operating system of the terminal device. If the terminal device detects the operation 4, the terminal device may switch the theme object of the application currently running on the terminal device. If the terminal device detects the operation 3, the terminal device may switch the theme object of the operating system of the terminal device, and switch the theme object of the application currently running on the terminal device. There may be one or more applications currently running on the terminal device.

It should be noted that an application 1 currently running on the terminal device indicates that the application 1 is in a running state on the terminal device. That the application 1 is in a running state on the terminal device may include any one of the following three cases: The application 1 is in a foreground running state on the terminal device; the application 1 is in a to-be-activated state on the terminal device; and the application 1 is in a background running state on the terminal device. A case that causes the application 1 in a to-be-activated state on the terminal device may include but is not limited to: When the application 1 is in a foreground running state on the terminal device, a status bar is pulled down to view a notification message, a start button (also referred to as a home button) is double tapped and a task running bar pops up, or a screen is locked. A case that causes the application 1 in a background running state on the terminal device may include but is not limited to: When the application 1 is in a foreground running state on the terminal device, a home button is pressed, or another application is started (causing the application 1 to be pushed into the background).

In an implementation, theme switching operations corresponding to all applications installed on the terminal device are the same. In another implementation, theme switching operations corresponding to applications installed on the terminal device are completely different or incompletely the same. For example, if the application 1 and the application 2 are in a running state on the terminal device, a theme switching operation corresponding to the application 1 is any one of an operation 1, an operation 2, and an operation 3, and a theme switching operation corresponding to the application 2 is the operation 3. If the terminal device detects the operation 1 or the operation 2, it indicates that the theme object of the application 1 needs to be switched. If the terminal device detects the operation 3, it indicates that the theme object of the application 1 and the theme object of the application 2 need to be switched.

The terminal device may simultaneously set content, for example, a background color, a screen saver picture, a screen saver, a ringtone, an operation interface, an icon, a text, and a screen layout, of a home screen of the terminal device by setting the theme object of the operating system. The terminal device may simultaneously set content, for example, a background color, a background picture, a message ringtone, an operation interface, an icon, a text, and a screen layout, of a window of an application by setting a theme object of an application. By setting the theme object of the operating system or the theme object of the application, the user can more conveniently customize the terminal.

In an implementation, the terminal device may set a default theme object of the operating system, and set a default theme object of each application. When the terminal device is started, the default theme object of the operating system may be used as the theme object of the operating system of the terminal device. Correspondingly, when an application installed on the terminal device is started, the default theme object of the application may be used as a theme object of the application.

In this embodiment of this application, when the terminal device is in a power-on state, the operating system of the terminal device has enabled a theme object. When a theme switching operation is detected, the terminal device may obtain a switching parameter, determine a to-be-enabled theme object based on the switching parameter, and then replace, with the to-be-enabled theme object, the theme object that is enabled by the operating system before the theme switching operation is detected.

It should be noted that, in this embodiment of this application, the mentioned theme switching operation includes the theme switching operation for the operating system and the theme switching operation for the application running on the terminal device. A series of operations performed after the theme switching operation for the operating system is detected are similar to a series of operations performed after the theme switching operation for the application is detected. To avoid redundant description, in this embodiment of this application, only the series of operations performed after the theme switching operation for the operating system is detected are described in some content. Based on this, the series of operations performed after the theme switching operation for the application is detected may be obtained through inference, which does not constitute a limitation on the technical solutions provided in embodiments of this application.

Step S202: The terminal device determines the to-be-enabled theme object based on the switching parameter. The to-be-enabled theme object is in a loaded state.

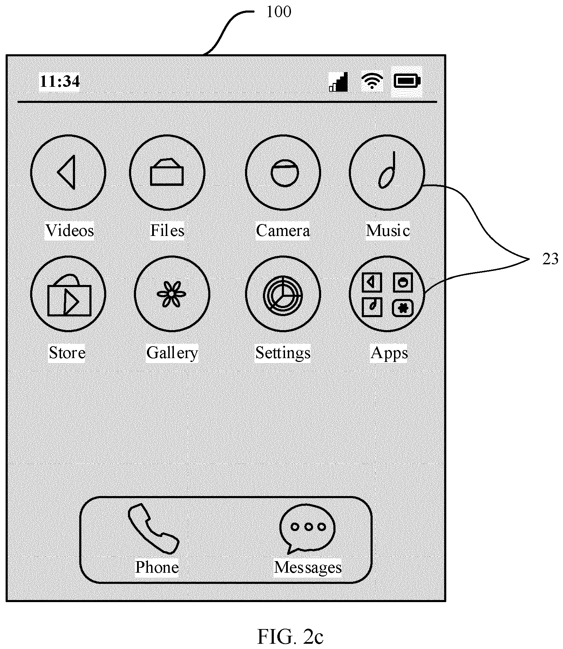

In this embodiment of this application, the switching parameter may be determined based on the theme switching operation detected by the terminal device. For example, when the theme switching operation is a trigger operation on an "OK" button on a theme setting page displayed on the terminal device, the switching parameter may be a theme parameter selected by the user on the theme setting page. For example, FIG. 2b is a schematic diagram of a scenario in which a user sets a theme parameter on a theme setting page. As shown in FIG. 2b, a background color and an icon shape may be set on the theme setting page 20, that is, the theme parameter includes the background color and the icon shape. The background color may be white or gray, and the icon shape may be a square or a circle. Before the trigger operation on the "OK" button 22 on the theme setting page displayed on the terminal device 100 is detected, a home screen of the terminal device is shown in FIG. 1a. It can also be seen from FIG. 2b that, before the theme parameter is changed, a background color of the home screen of the terminal device 100 is white, and an icon shape is a square. It can be learned from FIG. 2b that, on the theme setting page 20, the user may tap a drop-down list box 21 corresponding to the background color, so that all options (namely, white and gray) of the background color are displayed on the theme setting page 20, and the gray is selected from the displayed color options. Similarly, on the theme setting page 20, the user may tap a drop-down list box 21 corresponding to the icon shape, so that all options (namely, a square and a circle) of the icon shape are displayed on the theme setting page 20, and the circle is selected from the displayed shape options. After selecting the background color and the icon shape, the user may tap the "OK" button 22, so that the selected theme parameters take effect. The user can alternatively tap a "cancel" button to cancel the settings of the theme parameter. In this case, the selected theme parameters do not take effect. FIG. 2c is a schematic diagram of the home screen of the terminal device 100 after the user taps the "OK" button 22 on the theme setting page. As shown in FIG. 2c, shapes of icons 23 on the home screen of the terminal device 100 are circles, and the background color is gray, that is, the theme parameters selected by the user take effect.

It should be noted that, in the foregoing example, that the theme parameter includes the background color and the icon shape is merely used as an example, and does not constitute a limitation on this embodiment of this application. In another feasible implementation, the theme parameter may further include another parameter. It should be further noted that, that the user changes both the background color and the icon shape is merely used as an example, and does not constitute a limitation on this embodiment of this application. In another feasible implementation, the user may change only one parameter of the background color and the icon shape.

In an implementation, when the switching parameter is determined based on the theme switching operation detected by the terminal device, and the theme switching operation is a flip operation on the terminal device, the switching parameter may be a flip angle of the terminal device after the flip operation is performed on the terminal device. FIG. 1b is used as an example. The flip angle may be an angle between a screen plane of the terminal device 100 and the ground. In an implementation, the switching parameter may be an angle difference between a flip angle of the terminal device before the flip operation is performed on the terminal device and a flip angle of the terminal device after the flip operation is performed.

In this embodiment of this application, the terminal device may store a plurality of theme objects, and the plurality of theme objects include at least a theme object used by the terminal device before detecting the theme switching operation and a theme object used by the terminal device after detecting the theme switching operation. A theme parameter included in the operating system and a theme parameter included in the application may be the same or may be different. For example, the theme parameter of the operating system may include a background color and an icon shape of the home screen. The theme parameter of the application may also include a background color of an interface of the application and a shape of an icon on the interface; or the theme parameter of the application may include a background color of an interface of the application, a shape of an icon on the interface, and a background image of the interface. Theme parameters included in different applications may be the same or may be different. In other words, the theme object corresponding to the operating system and the theme object corresponding to the application may be the same or may be different, and theme objects corresponding to different applications may be the same or may be different.

In this embodiment of this application, the terminal device may preset a correspondence between a switching parameter and a theme object, and use a theme object corresponding to the obtained theme parameter as the to-be-enabled theme object. In an implementation, the switching parameter and the theme object are in a one-to-one correspondence.

In an implementation, the terminal device may store the plurality of theme objects. Each of the plurality of theme objects may include a class loader and path information, and the theme object is obtained by the class loader by loading a theme package indicated by the path information. Each theme package may include a resource identifier (resource ID) and a resource value. Different theme packages have a same resource ID but different resource values, and different theme objects include different class loaders.

The class loader may be configured to load the theme package indicated by the path information to memory space of the terminal device. It should be noted that, after the class loader loads the theme package indicated by the path information to the memory space of the terminal device, the terminal device may obtain a theme object. When the theme switching operation is detected, the terminal device directly switches to the to-be-enabled theme object, to implement theme switching. Specifically, the class loader may be a Java class loader. The Java class loader is a part of a Java runtime environment (Java runtime environment), and is responsible for dynamically loading a Java class to memory space of a Java virtual machine. The path information is used to uniquely indicate a storage location of a theme package in the terminal device, and different pieces of path information indicate different theme packages. When the operating system of the terminal device is Android, the theme package may be an Android application package (Android application package, APK). When the operating system of the terminal device is another operating system, the theme package may be an application package in the operating system.

A theme package includes all resources for forming a theme. Specifically, the theme package may include a resource ID and a resource value. The resource ID may be used to identify a resource item, and the resource item may be a theme parameter. For example, the resource ID may be an identifier of a background color or an identifier of an icon shape. The resource value may be a specific value of the theme parameter indicated by the resource ID. For example, when the theme parameter is a background color, the specific value of the theme parameter (namely, the resource value) may be white (or a character used to represent white) or gray (or a character used to represent gray).

Compared with that different theme packages have different resource identifiers and different resource values in the conventional technology, different theme packages have a same resource identifier but different resource values in this embodiment of this application. This can avoid selecting a resource ID based on a quantity of theme objects, and help reduce a code amount and improve theme switching efficiency. For example, if there are two theme objects on the home screen of the terminal device, when the terminal device uses the two theme objects, background colors of the home screen are different, that is, resource values of resource identifiers (namely, identifiers of background colors) in theme packages indicated by path information in the two theme objects are different. In the conventional technology, although the theme packages indicated by the path information in the two theme objects both have resource identifiers corresponding to the background colors, the resource identifiers cannot be the same. As shown in Table 1, when a value of a resource identifier corresponding to a background color in a theme package (for example, a theme package 1) indicated by path information in a theme object is white, the resource identifier is represented as "white_bg". When a value of a resource identifier corresponding to a background color in a theme package (for example, a theme package 2) indicated by path information in another theme object is gray, the resource identifier is represented as "gray _bg". In this way, when the background color of the home screen is determined or changed, different code branches appear in code stored in the terminal device for the foregoing two theme objects. One branch is used to determine a value (namely, white) corresponding to the resource identifier when the resource identifier is "white _bg", and the other branch is used to determine a value (namely, gray) corresponding to the resource identifier when the resource identifier is "gray _bg".

**Table 1**

| Theme package | Resource identifier | Resource value |
|---|---|---|
| Theme package 1 | white bg | White |
| Theme package 2 | gray_bg | Gray |

However, in this embodiment of this application, the resource identifiers in the theme packages indicated by the path information in the two theme objects may be the same, and the resource values are different. As shown in Table 2, the resource identifiers in the theme package 1 and the theme package 2 are "bg". This can avoid selecting a resource ID based on a quantity of theme objects, and help reduce a code amount and improve theme switching efficiency. In an Android operating system, two same resource IDs cannot be defined. However, in this embodiment of this application, different theme objects are obtained by loading different class loaders. Therefore, even if resource IDs in different theme packages are the same, the different theme packages can be loaded to the terminal device at the same time. In this way, a plurality of theme objects in a loaded state may exist in the terminal device. This can avoid a case in which the terminal device needs to spend a period of time in loading the to-be-enabled theme object when the terminal device detects the theme switching operation, and theme switching can be implemented only after the loading is completed, thereby helping improve theme switching efficiency and user experience.

**Table 2**

| Theme package | Resource identifier | Resource value |
|---|---|---|
| Theme package 1 | bg | White |
| Theme package 2 | bg | Gray |

In an implementation, if a new theme package is added to the terminal device, a resource identifier in the new theme package is the same as a resource identifier in an existing theme package in the terminal device, and a resource value in the new theme package is different from a resource value in the existing theme package. In a startup process of the terminal device, the terminal device may determine a quantity (for example, m) of currently stored theme packages, correspondingly create m class loaders, and then invoke the m class loaders to load theme packages (one class loader loads one theme package, and different class loaders load different theme packages) to a memory, to obtain m theme objects. Subsequently, one of the m theme objects is used as a current theme object. In this case, the m theme objects are all in a loaded state in the terminal device. Therefore, when a theme switching operation is detected, theme object switching may be immediately performed. This helps improve theme switching efficiency. m is an integer greater than 1.

Step S203: The terminal device switches the theme object of the terminal device to the to-be-enabled theme object.

Specifically, after determining the to-be-enabled theme object, the terminal device may switch the theme object of the terminal device to the to-be-enabled theme object. Before the theme object of the terminal device is switched to the to-be-enabled theme object, the to-be-enabled theme object is in a loaded state. This can avoid spending a period of time in loading the to-be-enabled theme object before the theme object of the terminal device is switched to the to-be-enabled theme object, thereby helping improve theme switching efficiency of the terminal device.

It should be noted that a period of time for loading the to-be-enabled theme object is not limited in this embodiment of this application. When the to-be-enabled theme object is the theme object of the operating system, the terminal device may load the to-be-enabled theme object in a startup process, or may load the to-be-enabled theme object when running load of the terminal device is relatively low (or the terminal device is relatively idle). When the to-be-enabled theme object is the theme object of the application, the terminal device may load the to-be-enabled theme object in a process of starting the application, or may load the to-be-enabled theme object when running load of the application is relatively low (or the application is relatively idle).

In an implementation, the terminal device may store the plurality of theme objects. The terminal device may simultaneously load the plurality of theme objects, or may load the plurality of theme objects based on a running status of the terminal device. Specifically, a quantity of theme objects that can be loaded simultaneously may be determined based on a load amount of the terminal device. For example, if the terminal device stores 10 theme objects, when the load amount of the terminal device is relatively large, the terminal device may first load one theme object; and then when the load amount of the terminal device is reduced to a relatively low value, the terminal device loads all or some of the remaining nine theme objects.

According to this embodiment of this application, when the theme switching operation is detected, the switching parameter is obtained; the to-be-enabled theme object is determined based on the switching parameter, where the to-be-enabled theme object is in a loaded state; and then a theme object of the terminal device is switched to the to-be-enabled theme object. Before the theme object of the terminal device is switched to the to-be-enabled theme object, the to-be-enabled theme object is in a loaded state. This can avoid spending a period of time in loading the to-be-enabled theme object before the theme object of the terminal device is switched to the to-be-enabled theme object, thereby helping improve theme switching efficiency of the terminal device.

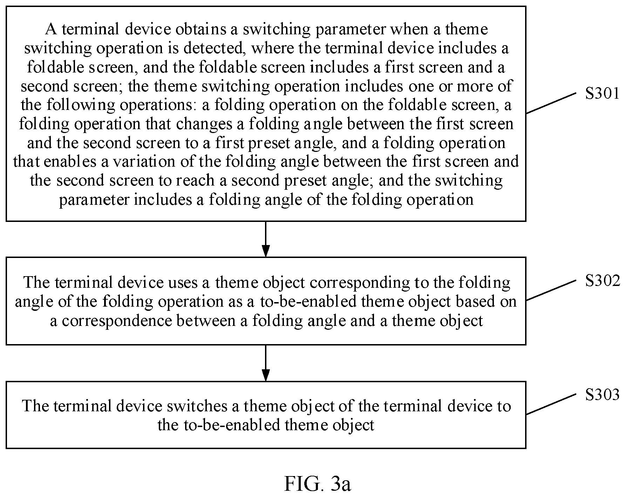

FIG. 3a is a schematic flowchart of another theme switching method according to an embodiment of this application. In the method, operations included in a theme switching operation are described in detail, and when a switching parameter includes a folding angle of a folding operation, how to determine a to-be-enabled theme object based on the folding angle of the folding operation is described in detail. An execution body of the theme switching method is a terminal device or a chip in a terminal device. The following uses an example in which the terminal device is the execution body of the theme switching method for description. As shown in FIG. 3a, the method may include but is not limited to the following steps.

Step S301: The terminal device obtains the switching parameter when the theme switching operation is detected, where the terminal device includes a foldable screen, and the foldable screen includes a first screen and a second screen; the theme switching operation includes one or more of the following operations: a folding operation on the foldable screen, a folding operation that changes a folding angle between the first screen and the second screen to a first preset angle, and a folding operation that enables a variation of the folding angle between the first screen and the second screen to reach a second preset angle; and the switching parameter includes the folding angle of the folding operation.

In this embodiment of this application, the foldable screen in the terminal device may include one or more screens, and the foldable screen may be presented as two or more screens after being folded. In this embodiment of this application, an example in which the foldable screen is presented as two screens (for example, the first screen and the second screen) is used for description. The theme switching operation may include one or more of the following operations: a trigger operation (for example, a tap, touch and hold, or slide operation) on a preset switching button in the terminal device; a flip operation on the terminal device (the flip operation on the terminal device changes a flip angle of the terminal device); the folding operation on the foldable screen, namely, a folding operation that changes the folding angle between the first screen and the second screen; the folding operation that changes the folding angle between the first screen and the second screen to the first preset angle; and the folding operation that enables the variation of the folding angle between the first screen and the second screen to reach (namely, greater than or equal to) the second preset angle. When the terminal device detects at least one of the foregoing operations, it indicates that a theme object of the terminal device needs to be switched.

When the theme switching operation is the folding operation on the foldable screen, the theme object of the terminal device may be switched provided that the folding angle between the first screen and the second screen changes. This can add interest to the terminal device. When the theme switching operation is the folding operation that changes the folding angle between the first screen and the second screen to the first preset angle, the theme object of the terminal device is switched only when the folding angle between the first screen and the second screen changes to a specific angle (namely, the first preset angle). When the theme switching operation is the folding operation that enables the variation of the folding angle between the first screen and the second screen to reach the second preset angle, the following case can be avoided: When the foldable screen shakes due to a collision of the terminal device or another reason (in this case, a user does not want to switch the theme object of the terminal device), the folding angle between the first screen and the second screen changes and then a theme of the terminal device is switched. This avoids a misoperation.

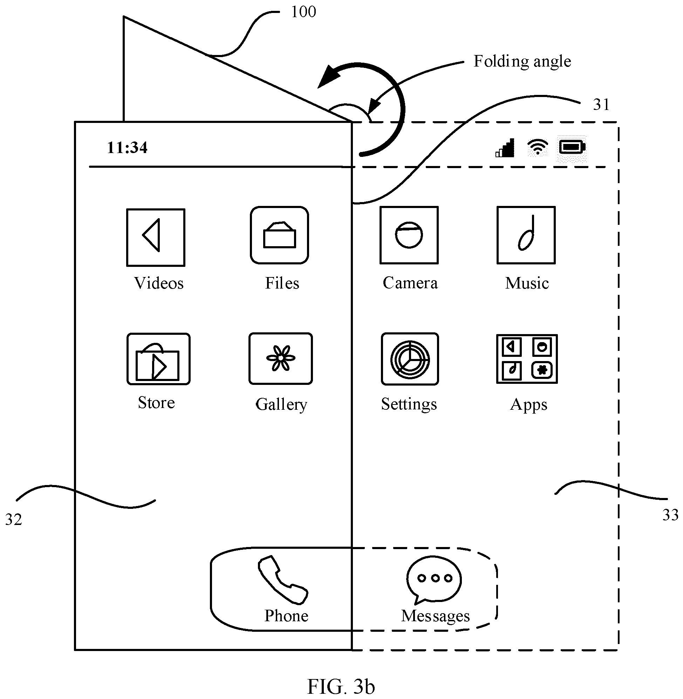

FIG. 3b is used as an example. FIG. 3b is a schematic diagram of a scenario in which a folding operation is performed on the terminal device 100 shown in FIG. 1a. It can be learned from FIG. 3b that a folding angle between the first screen 32 and the second screen 33 may change by rotating a rotating shaft 31 in the terminal device 100. When the first screen and the second screen are combined to form a complete screen, the folding angle is 0°. The folding angle may increase by rotating the screen backward. It should be noted that the terminal device shown in FIG. 3b includes one rotating shaft, and that the rotating shaft 31 is located in the middle of the terminal device is merely used as an example for description. In another feasible implementation, the terminal device may include a plurality of rotating shafts, and the plurality of rotating shafts may be disposed at any location of the terminal device as required. Optionally, the terminal device may include an infinite quantity of rotating shafts, that is, a screen of the terminal device may be folded at any location. It should be further noted that, that the first screen and the second screen shown in FIG. 3b have a same size is merely used as an example, and does not constitute a limitation on this embodiment of this application. In another feasible implementation, the first screen and the second screen may have different sizes. A size of a screen may be one or more of a length, a width, and an aspect ratio of the screen.

Both the first preset angle and the second preset angle may be set by the terminal device by default, or may be determined based on a user operation, and the first preset angle may be changed based on the user operation. Both the first preset angle and the second preset angle may be any angle in [0°, 360°]. In the terminal device shown in FIG. 3b, both the first preset angle and the second preset angle may be any angle in [0°, 180°]. There may be one or more first preset angles. For example, the first preset angle may include 90° and 180°. The second preset angle may be 1°, 2°, or another relatively small angle value.

In this embodiment of this application, when the terminal device detects the theme switching operation, and the theme switching operation is any one of the foregoing three folding operations (the folding operation on the foldable screen, namely, the folding operation that changes the folding angle between the first screen and the second screen; the folding operation that changes the folding angle between the first screen and the second screen to the first preset angle; and the folding operation that enables the variation of the folding angle between the first screen and the second screen to reach the second preset angle), the terminal device may use a folding angle of the folding operation as the switching parameter, or use a folding angle difference of the folding operation as the switching parameter. The folding angle of the folding operation may be a folding angle between the first screen and the second screen after the folding operation is performed. The folding angle difference of the folding operation is a difference between a folding angle between the first screen and the second screen before the folding operation is performed and a folding angle between the first screen and the second screen after the folding operation is performed. In an implementation, the switching parameter may be a random number generated by the terminal device when the terminal device detects the theme switching operation.

It should be noted that, for the rest of an execution process of step S301, refer to the specific descriptions of step S201 in FIG. 2a. Details are not described herein again.

Step S302: The terminal device uses a theme object corresponding to the folding angle of the folding operation as the to-be-enabled theme object based on a correspondence between a folding angle and a theme object.

Specifically, after obtaining the folding angle of the folding operation, the terminal device may use, based on a correspondence between a folding angle and a theme object that is preset by the terminal device, the theme object corresponding to the folding angle of the folding operation as the to-be-enabled theme object.

In an implementation, one theme object may correspond to one or more folding angles. For example, when the theme switching operation is the folding operation that enables the variation of the folding angle between the first screen and the second screen to reach the second preset angle, and the second preset angle is 5°, the correspondence between a folding angle and a theme object may be shown in Table 3.

**Table 3**

| Folding angle | Theme object |
|---|---|
| [0°, 4°] | Theme object 1 |
| [5°, 9°] | Theme object 2 |
| ... | ... |

In an implementation, when the switching parameter includes the folding angle difference of the folding operation, the terminal device may use, based on a preset correspondence between a folding angle difference and a theme object, a theme object corresponding to the folding angle difference of the folding operation as the to-be-enabled theme object. In an implementation, when the switching parameter includes the random number generated when the terminal device detects the theme switching operation, the terminal device may use, as the to-be-enabled theme object based on a preset correspondence between a random number and a theme object, a theme object corresponding to the random number generated when the terminal device detects the theme switching operation.

Step S303: The terminal device switches the theme object of the terminal device to the to-be-enabled theme object.

Specifically, after determining the to-be-enabled theme object, the terminal device may switch the theme object of the terminal device to the to-be-enabled theme object. In an implementation, when the terminal device includes the first screen and the second screen, a specific implementation of switching the theme object of the terminal device to the to-be-enabled theme object may be: switching a theme object of the first screen and a theme object of the second screen to the to-be-enabled theme object. In this manner, the theme object of the first screen and the theme object of the second screen may be simultaneously switched.

In this embodiment of this application, the terminal device includes the first screen and the second screen. The first screen and the second screen may jointly display one interface, or may display different interfaces. For example, when the folding angle between the first screen and the second screen is relatively small, the first screen and the second screen may jointly display an interface (for example, a home screen or an interface of an application). As shown in FIG. 3b, before the second screen 33 is folded, the first screen 32 and the second screen 33 may jointly display the home screen. For another example, when the folding angle between the first screen and the second screen is relatively large, or the terminal device needs to simultaneously display a plurality of interfaces (for example, two interfaces), the first screen and the second screen may display different interfaces. For example, the first screen may display an interface of an application a running on the terminal device, and the second screen may display an interface of an application b running on the terminal device. The interface of the application a is different from the interface of the application b.

In an implementation, the terminal device includes the first screen and the second screen, and when the theme switching operation is detected, and the first screen and the second screen display different interfaces, the terminal device needs to separately determine a to-be-enabled theme object corresponding to the first screen and a to-be-enabled theme object corresponding to the second screen, to switch the theme object of the first screen to the to-be-enabled theme object corresponding to the first screen, and switch the theme object of the second screen to the to-be-enabled theme object corresponding to the second screen.

If an interface displayed on the first screen is an interface of an operating system when the theme switching operation is detected, the switching the theme object of the first screen to the to-be-enabled theme object corresponding to the first screen indicates: switching a theme object of the operating system to the to-be-enabled theme object corresponding to the first screen. If an interface displayed on the first screen is an interface of an application when the theme switching operation is detected, the switching the theme object of the first screen to the to-be-enabled theme object corresponding to the first screen indicates: switching a theme object of the application to the to-be-enabled theme object corresponding to the first screen.

It should be noted that, when the terminal device needs to separately determine the to-be-enabled theme object corresponding to the first screen and the to-be-enabled theme object corresponding to the second screen, if the switching parameter includes a folding angle of the folding operation, the terminal device may determine, based on a correspondence between a folding angle and a theme object, the to-be-enabled theme object corresponding to the first screen and the to-be-enabled theme object corresponding to the second screen; or the terminal device may separately determine, based on different correspondences (between folding angles and theme objects), the to-be-enabled theme object corresponding to the first screen and the to-be-enabled theme object corresponding to the second screen. Similarly, if the switching parameter includes a folding angle difference of the folding operation, the terminal device may determine, based on a correspondence between a folding angle difference and a theme object, the to-be-enabled theme object corresponding to the first screen and the to-be-enabled theme object corresponding to the second screen; or the terminal device may separately determine, based on different correspondences (between folding angle differences and theme objects), the to-be-enabled theme object corresponding to the first screen and the to-be-enabled theme object corresponding to the second screen.

In an implementation, when the user rotates the first screen and/or the second screen to change the folding angle between the first screen and the second screen, the terminal device determines the to-be-enabled theme object based on a correspondence between a folding angle and a theme object. A different folding angle indicates a different determined to-be-enabled theme object. When the terminal device switches the theme object of the terminal device to the different to-be-enabled theme object, a background color displayed on the screen of the terminal device may be different. For example, as the folding angle becomes larger, the background color displayed on the screen of the terminal device may become darker or lighter. In this way, more screen feedbacks can be provided for the user in a screen rotation process. This helps improve user experience and add interest to the terminal device.

In an implementation, when the terminal device includes the foldable screen, and the foldable screen includes the first screen and the second screen, a specific implementation in which the terminal device switches the theme object of the terminal device to the to-be-enabled theme object may be: switching, to the to-be-enabled theme object, a theme object of a screen on which the theme switching operation is performed. In this manner, when the user flips only a part of a plurality of screens included in the terminal device, a theme object of only a screen that is flipped by the user may be switched.

The screen on which the theme switching operation is performed may be the first screen and/or the second screen. When the theme switching operation is the trigger operation (for example, the tap, touch and hold, or slide operation) on the preset switching button in the terminal device, the screen on which the theme switching operation is performed may be a screen on which the preset switching button is located. When the theme switching operation is a flip operation on the terminal device, screens on which the theme switching operation is performed are the first screen and the second screen. FIG. 3b is used as an example. When the user flips the second screen 33 backward, and the theme switching operation is a folding operation on the foldable screen, the screen on which the theme switching operation is performed is the second screen. The user flips the second screen 33 backward, so that a folding angle between the first screen 32 and the second screen 33 changes to the first preset angle, and the theme switching operation is the folding operation that changes the folding angle between the first screen and the second screen to the first preset angle. In this case, the screen on which the theme switching operation is performed is the second screen. The user flips the second screen 33 backward, so that a variation of a folding angle between the first screen 32 and the second screen 33 is greater than or equal to the second preset angle, and the theme switching operation is the folding operation that enables the variation of the folding angle between the first screen and the second screen to reach the second preset angle. In this case, the screen on which the theme switching operation is performed is the second screen.

In an implementation, the terminal device may include the foldable screen, the foldable screen may include the first screen and the second screen, and the to-be-enabled theme object may include a first theme object and a second theme object. When an association relationship exists between the first theme object and the second theme object, a specific implementation of switching the theme object of the terminal device to the to-be-enabled theme object by the terminal device may be: switching a theme object of the first screen to the first theme object, and switching a theme object of the second screen to the second theme object.

When the foldable screen includes N screens, the to-be-enabled theme object may include N theme objects, the N theme objects may be a group of theme objects, and an association relationship exists between theme objects in a same group of theme objects. Using a group of theme objects with association relationships helps add interest to the terminal device. N may be any positive integer.

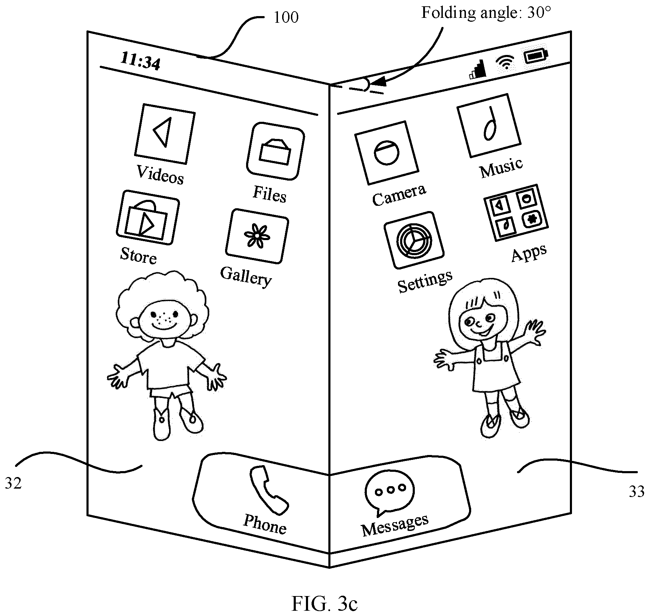

When the to-be-enabled theme object includes the first theme object and the second theme object, the first theme object is used as the theme object of the first screen, the second theme object is used as the theme object of the second screen, and the folding angle between the first screen and the second screen is 30°, FIG. 3c, a schematic diagram of background images displayed on the first screen and the second screen is used as an example. It can be learned from FIG. 3c that a background image of the first screen 32 is a little boy, a background image of the second screen 33 is a little girl, and a distance between the little boy and the little girl is relatively long.

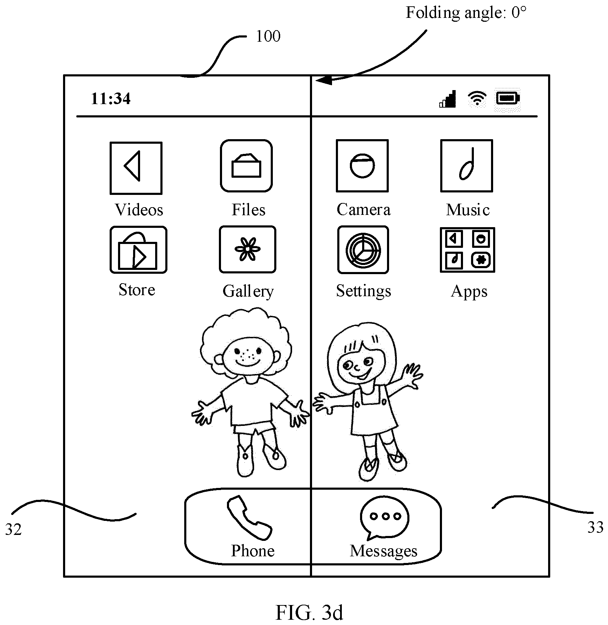

FIG. 3d is a schematic diagram of background images displayed on the first screen and the second screen when the user rotates the first screen and/or the second screen to change the folding angle between the first screen and the second screen to 0°. It can be learned from FIG. 3d that when the folding angle between the first screen and the second screen decreases from 30° to 0°, the distance between the little boy and the little girl decreases. It should be noted that the terminal device may determine the first theme object and the second theme object based on the folding angle between the first screen and the second screen. In the examples shown in FIG. 3c and FIG. 3d, when the first theme object and the second theme object are determined as the folding angle between the first screen and the second screen decreases, the first theme object is used as the theme object of the first screen, and the second theme object is used as the theme object of the second screen, the distance between the little boy and the little girl also decreases as the folding angle between the first screen and the second screen decreases. In this way, rotating the first screen and/or the second screen to make the folding angle between the first screen and the second screen become smaller can present the user with a dynamic effect that the distance between the little boy and the little girl becomes shorter. This helps add interest to the terminal device.

In an implementation, when the foldable screen includes the N screens, and the to-be-enabled theme object includes the N theme objects, the theme objects in the N theme objects may be independent of each other, that is, there is no association relationship between the theme objects.

According to this embodiment of this application, when the folding operation is detected, the folding angle of the folding operation is obtained, so that the theme object corresponding to the folding angle of the folding operation is used as the to-be-enabled theme object based on the correspondence between the folding angle and the theme object. The to-be-enabled theme object is in a loaded state. Then, the theme object of the terminal device is switched to the to-be-enabled theme object. Before the theme object of the terminal device is switched to the to-be-enabled theme object, the to-be-enabled theme object is in a loaded state. This can avoid spending a period of time in loading the to-be-enabled theme object before the theme object of the terminal device is switched to the to-be-enabled theme object, thereby helping improve theme switching efficiency of the terminal device.

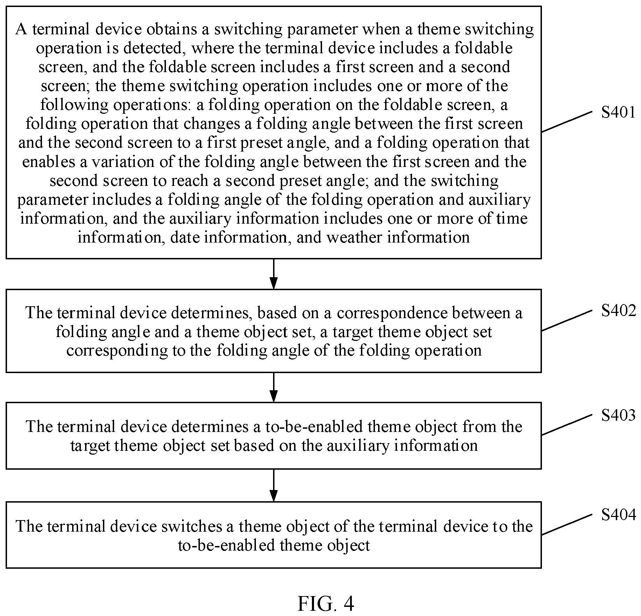

FIG. 4 is a schematic flowchart of still another theme switching method according to an embodiment of this application. In the method, when a switching parameter includes a folding angle of a folding operation and auxiliary information, how to determine a to-be-enabled theme object based on the folding angle of the folding operation and the auxiliary information is described in detail. An execution body of the theme switching method is a terminal device or a chip in a terminal device. The following uses an example in which the terminal device is the execution body of the theme switching method for description. As shown in FIG. 4, the method may include but is not limited to the following steps.

Step S401: The terminal device obtains the switching parameter when a theme switching operation is detected. The terminal device includes a foldable screen, and the foldable screen includes a first screen and a second screen. The theme switching operation includes one or more of the following operations: a folding operation on the foldable screen; a folding operation that changes a folding angle between the first screen and the second screen to a first preset angle; and a folding operation that enables a variation of the folding angle between the first screen and the second screen to reach a second preset angle. The switching parameter includes the folding angle of the folding operation and the auxiliary information, and the auxiliary information includes one or more of time information, date information, and weather information

In this embodiment of this application, when the terminal device detects the theme switching operation, and the theme switching operation is any one of the foregoing three folding operations (the folding operation on the foldable screen, namely, the folding operation that changes the folding angle between the first screen and the second screen; the folding operation that changes the folding angle between the first screen and the second screen to the first preset angle; and the folding operation that enables the variation of the folding angle between the first screen and the second screen to reach the second preset angle), the switching parameter may include the folding angle of the folding operation (or a folding angle difference of the folding operation, or a random number generated when the terminal device detects the theme switching operation) and the auxiliary information.

The auxiliary information may include but is not limited to one or more of time information, date information, weather information, and application information of one or more applications installed on the terminal device. For example, the application may be an application for recording a holiday, an application for recording a user mood, or the like. It should be noted that, for the rest of an execution process of step S401, refer to the specific descriptions of step S301 in FIG. 3a. Details are not described herein again.

Step S402: The terminal device determines, based on a correspondence between a folding angle and a theme object set, a target theme object set corresponding to the folding angle of the folding operation.

Specifically, when the switching parameter includes the folding angle of the folding operation and the auxiliary information, after the terminal device obtains the folding angle of the folding operation and the auxiliary information, the terminal device may determine, based on a preset correspondence between a folding angle and a theme object set, the target theme object set corresponding to the folding angle of the folding operation, and then determine the to-be-enabled theme object from the target theme object set based on the auxiliary information. Each theme object set includes two or more theme objects. Theme objects included in different theme object sets may be completely different, or may not be completely the same. For example, a theme object set a includes a theme object 1 and a theme object 2, and a theme object set b includes the theme object 1 and a theme object 3.

When theme objects in different theme object sets are used, at least one theme parameter on a display of the terminal device is different. For example, when the folding angle of the folding operation is greater than 0° (that is, the foldable screen is in a folded state), the target theme object set determined based on the folding angle of the folding operation is the theme object set a. When the terminal device uses any theme object in the theme object set a as a theme object of the terminal device, a background color of a home screen of the terminal device may be displayed as black. When the folding angle of the folding operation is 0° (that is, the foldable screen is in an unfolded state), the target theme object set determined based on the folding angle of the folding operation is the theme object set b. When the terminal device uses any theme object in the theme object set b as a theme object of the terminal device, a background color of a home screen of the terminal device may be displayed as white. In other words, the theme object set a includes a plurality of night theme objects, and the theme object set b includes a plurality of daytime theme objects.

When the terminal device uses different theme objects in the target theme object set as theme objects of the terminal device, at least one theme parameter on the display of the terminal device is different. For example, when the target theme object set includes a plurality of daytime theme objects, and the terminal device uses different daytime theme objects in the plurality of daytime theme objects as the theme objects of the terminal device, background pictures and/or icon shapes of the home screen displayed on the display of the terminal device may be different.

Step S403: The terminal device determines the to-be-enabled theme object from the target theme object set based on the auxiliary information.

Specifically, after determining the target theme object set, the terminal device may determine the to-be-enabled theme object from the target theme object set based on the auxiliary information. For example, when the auxiliary information includes the date information, and the date information in the terminal device is September 10, the terminal device may determine that the current day is Teacher's Day. If the target theme object set includes a plurality of daytime theme objects, the terminal device may use, as the to-be-enabled theme object, a theme object corresponding to Teacher's Day in the plurality of daytime theme objects. In this way, the theme object of the terminal device is switched to the to-be-enabled theme object, so that a background picture related to Teacher's Day can be displayed on the screen of the terminal device. This helps add interest to the terminal.

For another example, when the auxiliary information includes the weather information, and the weather information records that current weather is sunny, if the target theme object set includes a plurality of daytime theme objects, the terminal device may use, as the to-be-enabled theme object, a theme object corresponding to sunny weather in the plurality of daytime theme objects. In this way, the theme object of the terminal device is switched to the to-be-enabled theme object, so that a background picture (for example, a sun picture) related to the sunny weather can be displayed on the screen of the terminal device. This helps add interest to the terminal.

For another example, when the auxiliary information includes the application information of the application for recording the user mood, and the application information records that a current user mood is relatively poor, if the target theme object set includes a plurality of daytime theme objects, the terminal device may use, as the to-be-enabled theme object, a theme object corresponding to a pleasure mood in the plurality of daytime theme objects. In this way, the theme object of the terminal device is switched to the to-be-enabled theme object, so that a background picture related to the pleasure mood can be displayed on the screen of the terminal device. This can help the user feel better when the user sees this background picture, and also add interest to the terminal.

It should be noted that the background picture related to Teacher's Day, the background picture related to the sunny weather, and the background picture related to the pleasure mood may all include one or a plurality of images. When the plurality of images are included, the plurality of images are displayed as one dynamic image on the terminal device.

Step S404: The terminal device switches the theme object of the terminal device to the to-be-enabled theme object.

It should be noted that, for an execution process of step S404, refer to the specific descriptions of step S303 in FIG. 3a. Details are not described herein again.

According to this embodiment of this application, when the folding operation is detected, the folding angle of the folding operation and the auxiliary information are obtained. The target theme object set corresponding to the folding angle of the folding operation is determined based on the correspondence between the folding angle and the theme object set. The to-be-enabled theme object is determined from the target theme object set based on the auxiliary information, and the to-be-enabled theme object is in a loaded state. Then, the theme object of the terminal device is switched to the to-be-enabled theme object. Before the theme object of the terminal device is switched to the to-be-enabled theme object, the to-be-enabled theme object is in a loaded state. This can avoid spending a period of time in loading the to-be-enabled theme object before the theme object of the terminal device is switched to the to-be-enabled theme object, thereby helping improve theme switching efficiency of the terminal device. In addition, the to-be-enabled theme object is determined from the target theme object set based on the auxiliary information, which helps add interest to a terminal.

The foregoing describes in detail the methods in embodiments of this application. The following provides apparatuses in embodiments of this application.

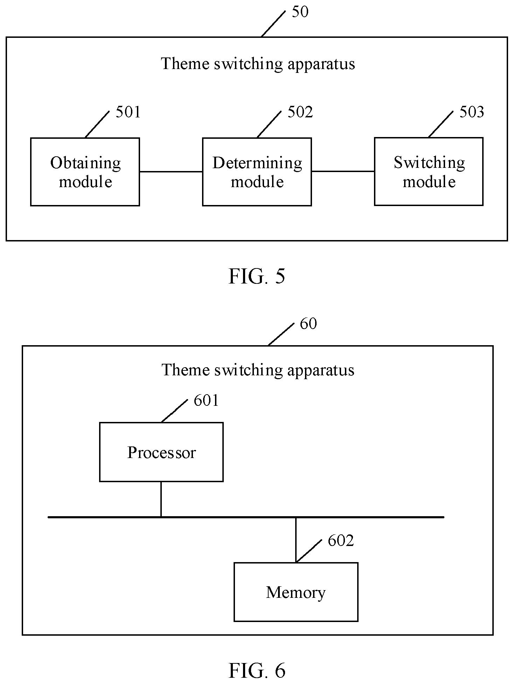

FIG. 5 is a schematic diagram of a structure of a theme switching apparatus according to an embodiment of this application. The theme switching apparatus 50 may be a terminal device or an apparatus (for example, a chip) having a function of a terminal device. The theme switching apparatus 50 is configured to perform the steps performed by the terminal device in the method embodiments corresponding to FIG. 2a to FIG. 4. The theme switching apparatus 50 may include:
an obtaining module 501, configured to obtain a switching parameter when a theme switching operation is detected;
a determining module 502, configured to determine a to-be-enabled theme object based on the switching parameter, where the to-be-enabled theme object is in a loaded state; and
a switching module 503, configured to switch a theme object of the terminal device to the to-be-enabled theme object.

In an implementation, the terminal device stores a plurality of theme objects, each of the plurality of theme objects includes a class loader and path information, and the theme object is obtained by the class loader by loading a theme package indicated by the path information; and each theme package includes a resource identifier and a resource value, different theme packages have a same resource identifier but different resource values, and different theme objects include different class loaders.

In an implementation, the terminal device includes a foldable screen, and the foldable screen includes a first screen and a second screen. The theme switching operation includes one or more of the following operations: a folding operation on the foldable screen; a folding operation that changes a folding angle between the first screen and the second screen to a first preset angle; and a folding operation that enables a variation of the folding angle between the first screen and the second screen to reach a second preset angle.

In an implementation, the switching parameter includes a folding angle of the folding operation. The determining module 502 may be specifically configured to use a theme object corresponding to the folding angle of the folding operation as the to-be-enabled theme object based on a correspondence between a folding angle and a theme object.

In an implementation, the switching parameter includes a folding angle of the folding operation and auxiliary information, and the auxiliary information includes one or more of time information, date information, and weather information. The determining module 502 may be specifically configured to determine, based on a correspondence between a folding angle and a theme object set, a target theme object set corresponding to the folding angle of the folding operation, and determine the to-be-enabled theme object from the target theme object set based on the auxiliary information.

In an implementation, the terminal device includes the foldable screen, and the foldable screen includes the first screen and the second screen. The switching module 503 may be specifically configured to switch, to the to-be-enabled theme object, a theme object of a screen on which the theme switching operation is performed.

In an implementation, the terminal device includes the foldable screen, the foldable screen includes the first screen and the second screen, the to-be-enabled theme object includes a first theme object and a second theme object, and an association relationship exists between the first theme object and the second theme object. The switching module 503 may be specifically configured to switch a theme object of the first screen to the first theme object, and switch a theme object of the second screen to the second theme object.

It should be noted that, for content that is not mentioned in the embodiment corresponding to FIG. 5 and specific implementations of steps performed by the modules, refer to the embodiments shown in FIG. 2a to FIG. 4 and the foregoing content. Details are not described herein again.

In an implementation, related functions implemented by the modules in FIG. 5 may be implemented in combination with a processor. FIG. 6 is a schematic diagram of a structure of a theme switching apparatus according to an embodiment of this application. The theme switching apparatus may be a terminal device or an apparatus (for example, a chip) having a function of a terminal device. The theme switching apparatus 60 may include a processor 601 and a memory 602. The processor 601 and the memory 602 may be connected to each other by using one or more communications buses, or may be connected to each other in another manner. The related functions implemented by the obtaining module 501, the determining module 502, and the switching module 503 shown in FIG. 5 may be implemented by using a same processor 601, or may be implemented by using a plurality of different processors 601.

The processor 601 is configured to perform a corresponding function of the terminal device in the methods shown in FIG. 2a to FIG. 4. The processor 601 may include one or more processors. For example, the processor 601 may be one or more central processing units (central processing unit, CPU), a network processor (network processor, NP), a hardware chip, or any combination thereof. When the processor 601 is one CPU, the CPU may be a single-core CPU or may be a multi-core CPU.

The memory 602 is configured to store program code and the like. The memory 602 may include a volatile memory (volatile memory), for example, a random access memory (random access memory, RAM); or the memory 602 may include a nonvolatile memory (nonvolatile memory), for example, a read-only memory (read-only memory, ROM), a flash memory (flash memory), a hard disk drive (hard disk drive, HDD), or a solid-state drive (solid-state drive, SSD); or the memory 602 may further include a combination of the foregoing types of memories.

The processor 601 may invoke the program code stored in the memory 602, to perform the following operations:
obtaining a switching parameter when a theme switching operation is detected;
determining a to-be-enabled theme object based on the switching parameter, where the to-be-enabled theme object is in a loaded state; and
switching a theme object of the terminal device to the to-be-enabled theme object.

In an implementation, the terminal device stores a plurality of theme objects, each of the plurality of theme objects includes a class loader and path information, and the theme object is obtained by the class loader by loading a theme package indicated by the path information; and each theme package includes a resource identifier and a resource value, different theme packages have a same resource identifier but different resource values, and different theme objects include different class loaders.

In an implementation, the terminal device includes a foldable screen, and the foldable screen includes a first screen and a second screen. The theme switching operation includes one or more of the following operations: a folding operation on the foldable screen; a folding operation that changes a folding angle between the first screen and the second screen to a first preset angle; and a folding operation that enables a variation of the folding angle between the first screen and the second screen to reach a second preset angle.

In an implementation, the switching parameter includes a folding angle of the folding operation. When determining the to-be-enabled theme object based on the switching parameter, the processor 601 may specifically perform the following operation: using a theme object corresponding to the folding angle of the folding operation as the to-be-enabled theme object based on a correspondence between a folding angle and a theme object.

In an implementation, the switching parameter includes a folding angle of the folding operation and auxiliary information, and the auxiliary information includes one or more of time information, date information, and weather information. When determining the to-be-enabled theme object based on the switching parameter, the processor 601 may specifically perform the following operations: determining, based on a correspondence between a folding angle and a theme object set, a target theme object set corresponding to the folding angle of the folding operation, and determining the to-be-enabled theme object from the target theme object set based on the auxiliary information.

In an implementation, the terminal device includes the foldable screen, and the foldable screen includes the first screen and the second screen. When switching the theme object of the terminal device to the to-be-enabled theme object, the processor 601 may specifically perform the following operation: switching, to the to-be-enabled theme object, a theme object of a screen on which the theme switching operation is performed.

In an implementation, the terminal device includes the foldable screen, the foldable screen includes the first screen and the second screen, the to-be-enabled theme object includes a first theme object and a second theme object, and an association relationship exists between the first theme object and the second theme object. When switching the theme object of the terminal device to the to-be-enabled theme object, the processor 601 may specifically perform the following operations: switching a theme object of the first screen to the first theme object, and switching a theme object of the second screen to the second theme object.

Further, the processor 601 may further perform operations corresponding to the terminal device in the embodiments shown in FIG. 2a to FIG. 4. For details, refer to descriptions in the method embodiments. Details are not described herein again.

An embodiment of this application further provides a computer-readable storage medium. The computer-readable storage medium may be configured to store computer software instructions used by the theme switching apparatus in the embodiment shown in FIG. 5. The computer software instructions are used to execute a program designed for the terminal device in the foregoing embodiments.

The computer-readable storage medium includes but is not limited to a flash memory, a hard disk, and a solid-state drive.

An embodiment of this application further provides a computer program product. When the computer product is run by a computing device, the method designed for the terminal device in the embodiments in FIG. 2a to FIG. 4 may be performed.

An embodiment of this application further provides a processor. The processor includes at least one circuit, configured to: obtain a switching parameter when a theme switching operation is detected; and determine a to-be-enabled theme object based on the switching parameter. The to-be-enabled theme object is in a loaded state. The processor further includes at least one circuit, configured to switch a theme object of the terminal device to the to-be-enabled theme object. The processor may be a chip, and may execute an instruction or a program designed for the terminal device in the foregoing embodiments.

An embodiment of this application further provides a chip system. The chip system includes a processor, and the processor is configured to implement the theme switching method designed for the terminal device in the embodiments in FIG. 2a to FIG. 4. In a feasible implementation, the chip system further includes a memory. The memory is configured to store program instructions and data that are necessary for implementing a function of the terminal device. The chip system may include a chip, or may include a chip and another discrete device.

An embodiment of this application further provides a chip, including a processor and a memory. The memory is configured to store a computer program, the processor is configured to invoke the computer program from the memory and run the computer program, and the computer program is configured to implement the methods in the foregoing method embodiments.

A person of ordinary skill in the art may be aware that units and algorithm steps in the examples described with reference to the embodiments disclosed in this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or the functions according to the embodiments of this application are generated. The computer may be a general-purpose computer, a dedicated computer, a computer network, or another programmable apparatus. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A theme switching method, applied to a terminal device, wherein the method comprises:
obtaining a switching parameter when a theme switching operation is detected;
determining a to-be-enabled theme object based on the switching parameter, wherein the to-be-enabled theme object is in a loaded state; and
switching a theme object of the terminal device to the to-be-enabled theme object.

2. The method according to claim 1, wherein the terminal device stores a plurality of theme objects, each of the plurality of theme objects comprises a class loader and path information, and the theme object is obtained by the class loader by loading a theme package indicated by the path information; and each theme package comprises a resource identifier and a resource value, different theme packages have a same resource identifier but different resource values, and different theme objects comprise different class loaders.

3. The method according to claim 1, wherein the terminal device comprises a foldable screen, and the foldable screen comprises a first screen and a second screen; and
the theme switching operation comprises one or more of the following operations:
a folding operation on the foldable screen;
a folding operation that changes a folding angle between the first screen and the second screen to a first preset angle; and
a folding operation that enables a variation of the folding angle between the first screen and the second screen to reach a second preset angle.

4. The method according to claim 3, wherein the switching parameter comprises a folding angle of the folding operation; and
the determining a to-be-enabled theme object based on the switching parameter comprises:
using a theme object corresponding to the folding angle of the folding operation as the to-be-enabled theme object based on a correspondence between a folding angle and a theme object.

5. The method according to claim 3, wherein the switching parameter comprises a folding angle of the folding operation and auxiliary information, and the auxiliary information comprises one or more of time information, date information, and weather information; and
the determining a to-be-enabled theme object based on the switching parameter comprises:
determining, based on a correspondence between a folding angle and a theme object set, a target theme object set corresponding to the folding angle of the folding operation; and
determining the to-be-enabled theme object from the target theme object set based on the auxiliary information.

6. The method according to any one of claims 1 to 5, wherein the terminal device comprises the foldable screen, and the foldable screen comprises the first screen and the second screen; and
the switching a theme object of the terminal device to the to-be-enabled theme object comprises:
switching, to the to-be-enabled theme object, a theme object of a screen on which the theme switching operation is performed.

7. The method according to any one of claims 1 to 5, wherein the terminal device comprises the foldable screen, the foldable screen comprises the first screen and the second screen, the to-be-enabled theme object comprises a first theme object and a second theme object, and an association relationship exists between the first theme object and the second theme object; and
the switching a theme object of the terminal device to the to-be-enabled theme object comprises:
switching a theme object of the first screen to the first theme object, and switching a theme object of the second screen to the second theme object.

8. A theme switching apparatus, wherein the apparatus is configured on a terminal device, and the apparatus comprises:
an obtaining module, configured to obtain a switching parameter when a theme switching operation is detected;
a determining module, configured to determine a to-be-enabled theme object based on the switching parameter, wherein the to-be-enabled theme object is in a loaded state; and
a switching module, configured to switch a theme object of the terminal device to the to-be-enabled theme object.

9. The apparatus according to claim 8, wherein the terminal device stores a plurality of theme objects, each of the plurality of theme objects comprises a class loader and path information, and the theme object is obtained by the class loader by loading a theme package indicated by the path information; and each theme package comprises a resource identifier and a resource value, different theme packages have a same resource identifier but different resource values, and different theme objects comprise different class loaders.

10. The apparatus according to claim 8, wherein the terminal device comprises a foldable screen, and the foldable screen comprises a first screen and a second screen; and
the theme switching operation comprises one or more of the following operations:
a folding operation on the foldable screen;
a folding operation that changes a folding angle between the first screen and the second screen to a first preset angle; and
a folding operation that enables a variation of the folding angle between the first screen and the second screen to reach a second preset angle.

11. The apparatus according to claim 10, wherein the switching parameter comprises a folding angle of the folding operation; and
the determining module is specifically configured to use a theme object corresponding to the folding angle of the folding operation as the to-be-enabled theme object based on a correspondence between a folding angle and a theme object.

12. The apparatus according to claim 10, wherein the switching parameter comprises a folding angle of the folding operation and auxiliary information, and the auxiliary information comprises one or more of time information, date information, and weather information; and
the determining module is specifically configured to: determine, based on a correspondence between a folding angle and a theme object set, a target theme object set corresponding to the folding angle of the folding operation; and determine the to-be-enabled theme object from the target theme object set based on the auxiliary information.

13. The apparatus according to any one of claims 8 to 12, wherein the terminal device comprises the foldable screen, and the foldable screen comprises the first screen and the second screen; and
the switching module is specifically configured to switch, to the to-be-enabled theme object, a theme object of a screen on which the theme switching operation is performed.

14. The apparatus according to any one of claims 8 to 12, wherein the terminal device comprises the foldable screen, the foldable screen comprises the first screen and the second screen, the to-be-enabled theme object comprises a first theme object and a second theme object, and an association relationship exists between the first theme object and the second theme object; and
the switching module is specifically configured to: switch a theme object of the first screen to the first theme object, and switch a theme object of the second screen to the second theme object.

15. A computer-readable storage medium, wherein the computer-readable storage medium stores a computer program, the computer program comprises program instructions, and when the program instructions are executed by a processor, the processor is enabled to perform the method according to any one of claims 1 to 7.
